# EUROPÄISCHE PATENTSCHRIFT

(11) **EP 1 294 088 B1**
(45) Veröffentlichungstag und Bekanntmachung des Hinweises auf die Patenterteilung: **20.04.2011**
(21) Anmeldenummer: 02102225.6
(22) Anmeldetag: 28.08.2002
(51) Int. Cl.: H02M 7/217

(54) **Schaltungsanordnung zur Gleichrichtung eines Signals**
Circuit for signal rectification
Circuit pour le redressement d'un signal

(30) Priorität: 28.08.2001 DE 10142022
(43) Veröffentlichungstag der Anmeldung: 19.03.2003
(73) Patentinhaber: NXP B.V., 5656 AG Eindhoven (NL)
(72) Erfinder: Wichern, Andreas, 52088, Aachen (DE)
(74) Vertreter: Williamson, Paul Lewis

(56) Entgegenhaltungen:
- DE-A- 3 012 823
- US-A- 4 053 796
- US-A- 4 360 866
- US-A- 5 473 529
- US-A- 5 721 507

## Beschreibung

Die Erfindung betrifft eine Schaltungsanordnung zur Gleichrichtung eines Signals, wobei zwei Transkonduktoren mit dem gleichzurichtenden Signal gegenphasig ansteuerbar sind.

In elektronischen Geräten, beispielsweise in Funkempfängern, ist es häufig erforderlich, eine Information über die Amplitude eines bezüglich des Vorzeichens wechselnden Signals (Wechselspannung) zu gewinnen, sei es um damit Regler anzusteuern, die auf die Amplitude reagieren, oder um aus einem empfangenen Signal den Nachrichteninhalt zurückzugewinnen (Demodulation). Dies wird meist mit aktiven Gleichrichterschaltungen vorgenommen.

Hierzu ist es beispielsweise aus US 5,721,507 bekannt, in dem einen Zweig eines Differenzverstärkers zwei Transistoren parallel vorzusehen, die gegenphasig mit dem gleichzurichtenden Signal beaufschlagt werden. Je nach Vorzeichen des gleichzurichtenden Signals leitet dabei der eine oder der andere der parallel geschalteten Transistoren. Dabei ergeben sich durch die Krümmung der Basis-Emitter-Kennlinie für kleine Amplituden des zugeführten Signals störende Nichtlinearitäten. Diese werden bei einer Doppelweg-Gleichrichterschaltung nach DE 30 12 823 vermieden, bei welcher die gegenphasigen zu demodulierenden Signale zunächst in je einem Transkonduktor verstärkt und dann von den Ausgängen der Transkonduktoren über je eine Diode einem Widerstand zugeführt werden. Dabei ist jeweils eine der Dioden in Abhängigkeit vom Vorzeichen des gleichzurichtenden Signals leitend. Es kann jedoch nicht vermieden werden, dass einer der Ausgangstransistoren desjenigen Transkonduktors, der mit der jeweils gesperrten Diode verbunden ist, in den Sättigungszustand gerät. Dieser Zustand ist insbesondere bei einer integrierten Schaltung nachteilig, da Strom in bzw. aus dem Substrat fließt und der betreffende Transistor nur mit einer Verzögerung aus dem Sättigungszustand wieder herauskommt. Damit ist das Verhalten der bekannten Doppelweg-Gleichrichterschaltung bei höheren Frequenzen nichtlinear.

Aufgabe der vorliegenden Erfindung ist es, eine Schaltungsanordnung zur Gleichrichtung eines Signals vorzuschlagen, welche über einen weiten Frequenzbereich präzise arbeitet und ein lineares Ausgangssignal liefert.

Diese Aufgabe wird erfindungsgemäß dadurch gelöst, dass die Ausgänge der Transkonduktoren über je eine erste Diode mit einem ersten Schaltungspunkt und über je eine zweite, zur ersten entgegengesetzt gepolte Diode mit einem zweiten Schaltungspunkt verbunden sind, dass die Schaltungspunkte an ein vorgegebenes Potential angeschlossen sind und dass mindestens einem der Schaltungspunkte ein gleichgerichtetes Signal entnehmbar ist.

Die erfindungsgemäße Schaltungsanordnung ist grundsätzlich sowohl für differentielle Signale, also Signale, die paarweise gegenphasig vorliegen, als auch für gegen Masse wirksame Signale geeignet. Die Gegenphasigkeit bei der Ansteuerung der Transkonduktoren kann dadurch erreicht werden, dass zwei gegenphasige Signale gleichsinnigen Eingängen der Transkonduktoren zugeführt werden oder dass gleichphasige Signale gegensinnigen Eingängen beider Transkonduktoren zugeleitet werden. Das vorgegebene Potential kann vom Fachmann derart gewählt werden, dass davon ausgehend eine Aussteuerung in beiden Richtungen möglich ist, das vorgegebene Potential also etwa in der Mitte des Aussteuerbereiches der Transkonduktoren liegt. Außerdem ist das jeweils vorgegebene Potential für den ersten und zweiten Schaltungspunkt derart zu wählen, dass ein sauberer Übergang zwischen den Dioden erfolgt.

Bei einer ersten vorteilhaften Ausgestaltung der erfindungsgemäßen Schaltungsanordnung kann das gleichgerichtete Signal als Spannungssignal in vorteilhafter Weise dadurch gewonnen werden, dass mindestens einer der Schaltungspunkte über einen Stromeingang eines Strom/Spannungswandlers mit dem vorgegebenen Potential verbunden ist, dessen Ausgang den Ausgang der Schaltungsanordnung bildet. Dabei ist vorzugsweise vorgesehen, dass der Strom/Spannungswandler von einer Stromspiegelschaltung gebildet ist.

Bei einer zweiten Ausgestaltung ist zur Gewinnung eines Spannungssignals vorgesehen, dass mindestens einer der Schaltungspunkte über einen Widerstand an das vorgegebene Potential angeschlossen ist und einen Ausgang der Schaltungsanordnung bildet.

Ausführungsbeispiele der Erfindung sind in der Zeichnung anhand mehrerer Figuren dargestellt und in der nachfolgenden Beschreibung näher erläutert. Es zeigt:
Fig. 1 ein erstes Ausführungsbeispiel,
Fig. 2 eine Kennlinie einer erfindungsgemäßen Schaltungsanordnung,
Fig. 3 ein zweites Ausführungsbeispiel und
Fig. 4 ein drittes Ausführungsbeispiel.

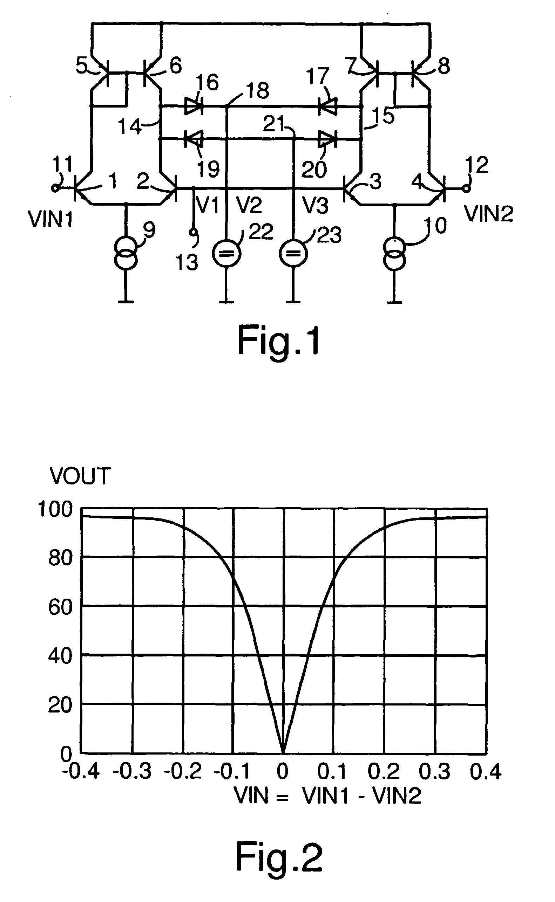

Die Ausführungsbeispiele nach den Figuren 1, 3 und 4 bestehen jeweils aus zwei Transkonduktoren. Ein erster Transkonduktor enthält einen Differenzverstärker, der von den Transistoren 1, 2 und einer Stromquelle 9 gebildet wird, und eine Stromspiegelschaltung aus den Transistoren 5 und 6. In gleicher Weise ist ein zweiter Transkonduktor aus den Transistoren 3, 4, einer Stromquelle 10 und weiteren Transistoren 7, 8 aufgebaut. Der Fachmann kann die Transkonduktoren auch mit anderen geeigneten verstärkenden Bauelementen realisieren, wie beispielsweise Feldeffekttransistoren oder Röhren.

Bei dem in Fig. 1 dargestellten Ausführungsbeispiel ist die Ableitung eines Spannungs-Ausgangssignals im einzelnen nicht dargestellt, um die grundsätzliche Funktion der erfindungsgemäßen Schaltungsanordnung zu erläutern.

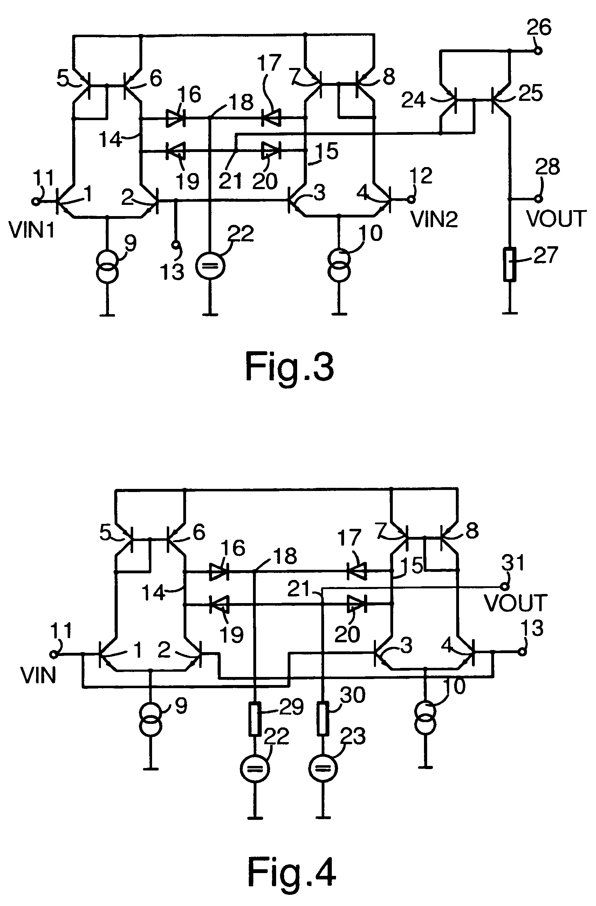

Das gleichzurichtende Signal wird bei den Ausführungsbeispielen nach Fig. 1 und 3 über Eingänge 11 und 12 den Basisanschlüssen der Transistoren 1 und 4 zugeleitet. Die Basisanschlüsse der Transistoren 2 und 3 liegen auf einem Referenzpotential V1, das bei 13 zugeleitet wird. Die verstärkten Signale können den Ausgängen 14, 15 der Transkonduktoren entnommen werden. Diese Ausgänge sind über je eine Diode 16, 17 mit einem ersten Schaltungspunkt 18 und über je eine dazu entgegengesetzt gepolte Diode 19, 20 mit einem zweiten Schaltungspunkt 21 verbunden. Die Schaltungspunkte 18, 21 liegen bei der Darstellung nach Fig. 1 jeweils auf konstantem Potential V2, V3, was durch die Gleichspannungsquellensymbole 22 und 23 angedeutet ist. Schaltungseinzelheiten zur Verwirklichung eines konstanten Potentials sind an sich bekannt und brauchen im Zusammenhang mit der erfindungsgemäßen Schaltungsanordnung nicht erläutert zu werden.

Somit liegt das gleichgerichtete Signal als Stromsignal vor. Bei Änderungen des Signals ist in beiden Richtungen gewährleistet, dass aus dem Ausgang 14, 15 ein Strom in die Spannungsquellen 22, 23 fließen kann. Bei der richtigen Wahl der Potentiale V2, V3 innerhalb der Ausgangskennlinie der Transkonduktoren sind eine lineare Verstärkung und eine lineare Gleichrichtung somit gesichert, insbesondere auch deshalb, weil die Transistoren 6, 7 nicht in die Sättigung gesteuert werden.

Fig. 2 zeigt schematisch die Gleichrichterkennlinie einer erfindungsgemäßen Schaltungsanordnung bei einer den Amplitudenbereich von -0,4 bis +0,4 durchlaufenden Wechselspannung VIN = VIN1-VIN2, wobei das Ausgangssignal VOUT lediglich in Relativ-Werten angegeben ist. Aus der Darstellung wird deutlich, dass auch für ganz kleine Amplituden um den Nullpunkt bereits ein linearer Kennlinienverlauf vorliegt. Je nach Anforderungen an die Linearität kann eine solche Schaltungsanordnung dann bis zu Ausgangsamplituden von 40%, 60% oder 70% betrieben werden.

Bei dem in Fig. 3 dargestellten Ausführungsbeispiel erfolgt eine Wandlung des als Stromsignal vorliegenden Signals am Schaltungspunkt 21 mit Hilfe eines Strom/Spannungswandlers, der als Stromspiegelschaltung mit den Transistoren 24, 25 und einem Arbeitswiderstand 27 ausgebildet ist. Am Ausgang 28 kann dann das gleichgerichtete Signal entnommen werden. Dem Anschluß 26 ist ein vorgegebenes Potential zuzuführen, das etwa dem Potential V2 (Fig. 1) entspricht.

Das Ausgangssignal der Schaltungsanordnung nach Fig. 2 liegt - im Gegensatz zu dem gleichzurichtenden Eingangssignal - nicht als differentielles Signal, sondern als Signal gegenüber Masse vor. Sollte für die weitere Verarbeitung ein differentielles Signal benötigt werden, kann die Schaltungsanordnung nach Fig. 3 durch einen an dem Schaltungspunkt 18 angeschlossenen weiteren Strom/Spannungswandler ergänzt werden.

Bei der Schaltungsanordnung nach Fig. 4 wird ein Spannungssignal am Ausgang 31 dadurch erzeugt, dass zwischen dem Schaltungspunkt 21 und der Spannungsquelle 23 ein Widerstand 30 eingefügt ist, der groß genug ist, um ein brauchbares Spannungssignal zu erzeugen, jedoch nicht so groß ist, um den Transistor 7 in die Sättigung zu steuern. Aus Symmetriegründen ist ein weiterer Widerstand 29 vorgesehen. Auch hier kann ein weiterer nicht dargestellter Ausgang vom Schaltungspunkt 18 abgeleitet werden.

Während den Schaltungsanordnungen nach den Figuren 1 und 3 differentielle Eingangssignale zuzuführen sind, ist die Schaltungsanordnung nach Fig. 4 für ein gegen Masse wirksames Eingangssignal ausgelegt. Dieses wird über den Eingang 11 den Transistoren 1, 3 zugeführt, während die Basisanschlüsse der Transistoren 2, 4 auf dem Referenzpotential V1 liegen, das einem Eingang 13 zugeführt wird.

## Patentansprüche

1. Schaltungsanordnung zur Gleichrichtung eines Signals, wobei zwei Transkonduktoren mit dem gleichzurichtenden Signal gegenphasig ansteuerbar sind,
**dadurch gekennzeichnet,**
**dass** die Ausgänge der Transkonduktoren (1 bis 10) über je eine erste Diode (16, 17) mit einem ersten Schaltungspunkt (18) und über je eine zweite, zur ersten entgegengesetzt gepolte Diode (19, 20) mit einem zweiten Schaltungspunkt (21) verbunden sind, dass die Schaltungspunkte an ein vorgegebenes Potential angeschlossen sind und dass mindestens einem der Schaltungspunkte ein gleichgerichtetes Signal entnehmbar ist.

2. Schaltungsanordnung nach Anspruch 1,
**dadurch gekennzeichnet,**
**dass** mindestens einer der Schaltungspunkte (21) über einen Stromeingang eines Strom/Spannungswandlers (24, 25, 27) mit dem vorgegebenen Potential verbunden ist, dessen Ausgang den Ausgang der Schaltungsanordnung bildet.

3. Schaltungsanordnung nach Anspruch 2,
**dadurch gekennzeichnet,**
**dass** der Strom/Spannungswandler von einer Stromspiegelschaltung (24, 25) gebildet ist.

4. Schaltungsanordnung nach Anspruch 1,
**dadurch gekennzeichnet,**
**dass** mindestens einer der Schaltungspunkte (18, 21) über einen Widerstand (29, 30) an das vorgegebene Potential angeschlossen ist und einen Ausgang (31) der Schaltungsanordnung bildet.

## Claims

1. Circuit arrangement for rectifying a signal, wherein two transconductors are inversely phased controllable by means of the signal to be rectified,
**characterized in that**
the outputs of the transconductors (1 to 10) are connected per a first diode (16, 17) with a first circuit node (18) and per a second diode (19, 20) oppositely polarized to the first with a second circuit node (21),
that the circuit nodes are connected to a predetermined potential and
that a rectified signal is extractable from at least one of the circuit nodes.

2. Circuit arrangement according to claim 1 **characterized in that** at least one of the circuit nodes (21) is connected via a current input of a current/voltage converter (24, 25, 27) with the predetermined potential, the output of which forms the output of the circuit arrangement.

3. Circuit arrangement according to claim 2 **characterized in that** the current/voltage converter is formed by a current mirror circuit (24, 25).

4. Circuit arrangement according to claim 1 **characterized in that** at least one of the circuit nodes (18, 21) is connected via a resistance (29, 30) to the predetermined potential and forms an output (31) of the circuit arrangement.

## Revendications

1. Circuit pour le redressement d'un signal, dans lequel deux transconducteurs peuvent être commandés en opposition de phase avec le signal à redresser, **caractérisé en ce que** les sorties des transconducteurs (1 à 10) sont reliées chacune par une première diode (16, 17) à un premier point du circuit (18) et chacune par une deuxième diode (19, 20), polarisée à l'inverse de la première diode, à un deuxième point du circuit (21), **en ce que** les points du circuit sont reliés à un potentiel prédéfini et et **en ce qu'**un signal redressé est disponible en au moins un des points du circuit.

2. Circuit selon la revendication 1, **caractérisé en ce qu'**au moins un des points du circuit (21) est relié au potentiel prédéfini par une entrée de courant d'un convertisseur de courant/tension (24, 25, 27) dont la sortie forme la sortie du circuit.

3. Circuit selon la revendication 2, **caractérisé en ce que** le convertisseur de courant/tension est formé par un circuit miroir de courant (24, 25).

4. Circuit selon la revendication 1, **caractérisé en ce qu'**au moins un des points du circuit (18, 21) est relié par le biais d'une résistance (29, 30) au potentiel prédéfini et forme une sortie (31) du circuit.
